# EUROPÄISCHE PATENTANMELDUNG

(11) **EP 4 491 000 A1**
(43) Veröffentlichungstag der Anmeldung: **15.01.2025**
(21) Anmeldenummer: 24182146.1
(22) Anmeldetag: 14.06.2024
(51) Int. Cl.: A01B 76/00

(54) **VERFAHREN ZUR STEUERUNG EINES DREIPUNKT-KRAFTHEBERS**

(30) Priorität: 10.07.2023 DE 102023118128
(71) Anmelder: Deere & Company, Moline, IL 61265 (US)
(72) Erfinder: Bechtold, Patrick, Mannheim (DE); Schreieck, Lucas, Mannheim (DE)
(74) Vertreter: Dehnhardt, Florian Christopher

(57) **Zusammenfassung**

Verfahren zur Steuerung eines Dreipunkt-Krafthebers (14), umfassend linke und rechte Unterlenker (16a, 16b), die jeweils in einem ersten Endbereich (18a, 18b) schwenkbeweglich an einer traktorseitigen Tragestruktur (20) angelenkt sind und in einem zweiten Endbereich (40a, 40b) ein Kupplungselement (42a, 42b) zur Anbringung eines Anbaugeräts (36) aufweisen, wobei sich die Kupplungselemente (42a, 42b) durch Verschwenken der Unterlenker (16a, 16b) mittels eines Hubwerks (48) gegenüber dem Erdboden (58) anheben und absenken lassen. Hierbei wird das Hubwerk (48) in einem Reinigungsmodus auf Veranlassung einer Kontrolleinheit (86) derart angesteuert, dass im Bereich der Kupplungselemente (42a, 42b) ein zum Erdboden (58) gerichteter Beschleunigungsimpuls (aₚᵤₗₛₑ) durch Unterbrechung einer an den Unterlenkern (16a, 16b) hervorgerufenen kurzhubigen Absenkbewegung erzeugt wird.

## Beschreibung

Die Erfindung betrifft ein Verfahren zur Steuerung eines Dreipunkt-Krafthebers, umfassend linke und rechte Unterlenker, die jeweils in einem ersten Endbereich schwenkbeweglich an einer traktorseitigen Tragestruktur angelenkt sind und in einem zweiten Endbereich ein Kupplungselement zur Anbringung eines Anbaugeräts aufweisen, wobei sich die Kupplungselemente durch Verschwenken der Unterlenker mittels eines Hubwerks gegenüber dem Erdboden anheben und absenken lassen.

Derartige Dreipunkt-Kraftheber finden bei landwirtschaftlichen Traktoren verbreitet Verwendung und dienen der Anbringung unter anderem getragener Anbaugeräts zur Bodenbearbeitung, wie beispielsweise eines Pflugs, einer Egge, eines Grubbers oder dergleichen. Der im Heck- (oder auch Frontbereich) des landwirtschaftlichen Traktors vorgesehene Dreipunkt-Kraftheber umfasst linke und rechte Unterlenker, die über zugehörige Anlenkstellen im unteren Bereich einer tragenden Chassisstruktur des landwirtschaftlichen Traktors schwenkbeweglich angebracht sind. Im Falle eines heckseitigen Dreipunkt-Krafthebers handelt es sich dabei meist um ein Differentialgehäuse. Ein zentraler Oberlenker, der an einer weiteren Anlenkstelle in einem oberen Bereich der tragenden Chassisstruktur des landwirtschaftlichen Traktors schwenkbeweglich angeordnet ist, dient der oberen Abstützung bzw. Führung eines am Dreipunkt-Kraftheber angebrachten Anbaugeräts. Die Unterlenker sowie der Oberlenker weisen an ihren freien Enden jeweilige Kupplungselemente in Gestalt selbstverriegelnder Fanghaken auf, in die das Anbaugerät mittels komplementär ausgebildeter Kupplungskugeln einhängbar ist.

Zum Heben und Senken des Anbaugeräts ist ein hydraulisch steuerbares Hubwerk vorgesehen, das linke und rechte Hubarme aufweist, die sich mittels wenigstens eines Hydraulikzylinders um eine gemeinsame Welle verschwenken lassen, wobei die Schwenkbewegung über damit verbundene Hubstreben auf die Unterlenker übertragen wird.

Gerade beim Bearbeiten schwerer bzw. feuchter Ackerböden haften an den Bearbeitungswerkzeugen bodeneingreifender Anbaugeräte nach dem Ausheben des Anbaugeräts meist unerwünschte Erdrückstände an. Diese fallen zu einem späteren Zeitpunkt, insbesondere während der Fahrt des landwirtschaftlichen Traktors, ab und führen zu Verunreinigungen von Feld-, Wirtschafts- und Transportwegen. Dies ist vor allem beim Befahren öffentlicher Straßen kritisch.

Es ist daher Aufgabe der vorliegenden Erfindung, ein Verfahren der eingangs genannten Art hinsichtlich der gezielten Entfernung von an den Bearbeitungswerkzeugen bodeneingreifender Anbaugeräte anhaftender Erdrückstände anzugeben.

Diese Aufgabe wird durch ein Verfahren zur Steuerung eines Dreipunkt-Krafthebers mit den Merkmalen des Patentanspruchs 1 gelöst.

Bei dem Verfahren zur Steuerung eines Dreipunkt-Krafthebers umfasst der Dreipunkt-Kraftheber linke und rechte Unterlenker, die jeweils in einem ersten Endbereich schwenkbeweglich an einer traktorseitigen Tragestruktur angelenkt sind und in einem zweiten Endbereich ein Kupplungselement zur Anbringung eines Anbaugeräts aufweisen, wobei sich die Kupplungselemente durch Verschwenken der Unterlenker mittels eines Hubwerks gegenüber dem Erdboden anheben und absenken lassen. Erfindungsgemäß wird das Hubwerk in einem Reinigungsmodus auf Veranlassung einer Kontrolleinheit derart angesteuert, dass im Bereich der Kupplungselemente ein zum Erdboden gerichteter Beschleunigungsimpuls durch Unterbrechung einer an den Unterlenkern hervorgerufenen kurzhubigen Absenkbewegung erzeugt wird.

Der aufgrund der Unterbrechung und damit plötzlichen Abbremsung der Absenkbewegung erzeugte Beschleunigungsimpuls führt zu einem gezielten und effektiven Herabschleudern von Erdrückständen, die nach dem Ausheben des Anbaugeräts aus dem Ackerboden an dessen bodeneingreifenden Bearbeitungswerkzeugen anhaften. Naturgemäß ist der erzielbare Reinigungseffekt umso besser, je größer der Betrag des Beschleunigungsimpulses und/oder die Masse der anhaftenden Erdrückstände ist.

Die Koordination der solchermaßen im Reinigungsmodus hervorgerufenen "Reinigungsbewegung" erfolgt durch die Kontrolleinheit selbsttätig und damit besonders bedienerfreundlich, wobei der Reinigungsmodus beispielsweise vor dem Wenden des landwirtschaftlichen Traktors auf einem an eine zu bearbeitende Ackerfläche angrenzenden Feld- oder Wirtschaftsweg oder vor Verlassen der Ackerfläche in Richtung einer Zufahrtstraße aktiviert wird.

Das zum Heben und Senken des Anbaugeräts vorgesehene Hubwerk ist in der Regel hydraulisch steuerbar und weist linke und rechte Hubarme auf, die sich mittels wenigstens eines Hydraulikzylinders um eine gemeinsame Welle verschwenken lassen. Die Schwenkbewegung wird hierbei über mit den Hubarmen verbundene Hubstreben auf die Unterlenker übertragen.

Der wenigstens eine Hydraulikzylinder ist bei gängigen Dreipunkt-Krafthebern meist einfachwirkend ausgebildet. Hierbei lässt sich eine als Kolbenkammer ausgebildete Arbeitskammer des wenigstens einen Hydraulikzylinders zum Anheben der Unterlenker über ein Hubventil mit unter Druck stehender Hydraulikflüssigkeit aus einem Hydrauliksystem des landwirtschaftlichen Traktors beaufschlagen. Das Absenken erfolgt passiv unter der Wirkung der auf die Unterlenker bzw. das daran befindliche Anbaugerät angreifenden Schwerkraft, wozu die Kolbenkammer über ein Senkventil dahingehend druckentlastet wird, dass die Hydraulikflüssigkeit unter dem Einfluss der auf die Unterlenker bzw. das Anbaugerät wirkenden Schwerkraft in Richtung eines Hydraulikreservoirs abfließen kann.

Ist hingegen ein doppeltwirkender Hydraulikzylinder mit einer als Ringkammer ausgebildeten weiteren Arbeitskammer vorgesehen, so werden die Unterlenker durch Druckbeaufschlagung der Ringkammer des wenigstens einen Hydraulikzylinders bei gleichzeitiger Druckentlastung der Kolbenkammer aktiv abgesenkt und dabei beschleunigt.

Bei beiden Zylinderausführungen erfolgt die Unterbrechung und damit Blockierung der Absenkbewegung der Unterlenker, indem das Senkventil mit möglichst geringer Steuerverzögerung geschlossen wird. Dies führt zur Erzeugung eines dementsprechend steilflankigen (ruckartigen) Beschleunigungsimpulses.

Die im Reinigungsmodus ausgeführte Absenkbewegung der Unterlenker ist insofern kurzhubig, als diese lediglich einen Bruchteil des insgesamt zur Verfügung stehenden Schwenkwinkels der Unterlenker ausmacht und nur einige wenige Winkelgrade beträgt.

Vorteilhafte Weiterbildungen des erfindungsgemäßen Verfahrens gehen aus den Unteransprüchen hervor.

Um eine zu möglichen Beschädigungen führende Kollision des Anbaugeräts mit dem Erdboden auszuschließen, wird die Absenkbewegung ausschließlich ausgehend von einer angehobenen Transportstellung der Unterlenker ausgeführt. Die Erkennung der angehobenen Transportstellung erfolgt seitens der Kontrolleinheit, wozu diese die Sensordaten eines Winkelsensors auswertet, der der Erfassung der aktuellen Hubstellung der Unterlenker dient.

Im Hinblick auf eine weitere Verbesserung des Reinigungseffekts kann vorgesehen sein, dass die Absenkbewegung insbesondere nach vorheriger Rückkehr in die angehobene Transportstellung wiederholt ausgeführt wird. Die Anzahl der Wiederholungen kann beispielsweise vom Fahrer über ein mit der Kontrolleinheit in Verbindung stehendes Bedienterminal abhängig vom Anbaugerätetyp sowie den jeweiligen Bodenverhältnissen angepasst werden. Dies kann entweder durch unmittelbare Vorgabe der gewünschten Anzahl der Wiederholungen über ein Eingabeelement erfolgen oder aber solange, wie der Bediener ein zugehöriges Bedienelement betätigt (gedrückt) hält. So dürfte in aller Regel bei einem in schwerem Ackerboden eingesetzten Pflug ein erhöhter Reinigungsbedarf gegenüber einem lediglich oberflächlich eingreifenden Grubber bei trockenen Bodenbedingungen bestehen.

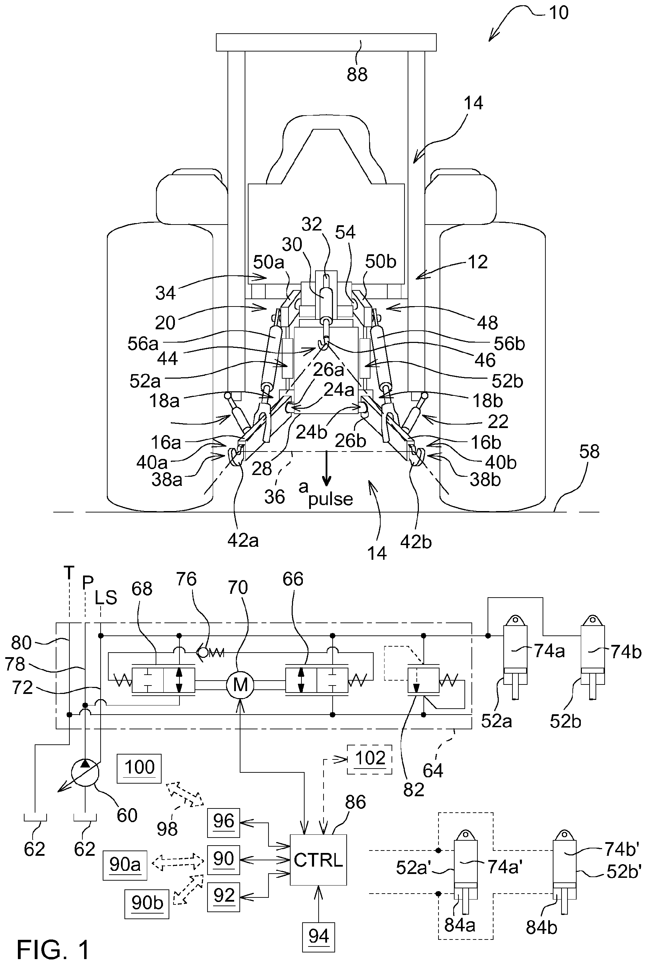

Der Reinigungsmodus kann manuell über das mit der Kontrolleinheit in Verbindung stehende Bedienterminal oder selbsttätig aktiviert werden. In letzterem Fall können von der Kontrolleinheit kartografische Angaben von an die zu bearbeitende Ackerfläche angrenzenden Feld- oder Wirtschaftswegen durch Abgleich der mittels des GPS-Navigationssystems ermittelten aktuellen Position der landwirtschaftlichen Traktors insofern berücksichtigt werden, als diese bei der Durchführung eines Wendevorgangs zwischen zwei benachbarten Feldreihen oder beim Verlassen der Ackerfläche nach Abschluss des Bodenbearbeitungsvorgangs voraussichtlich befahren werden, mithin die Ausführung eines Reinigungsvorgangs ratsam ist. Die Durchführung eines Wendevorgangs kann der Kontrolleinheit beispielsweise seitens eines (in der Figur nicht wiedergegebenen) Vorgewendemanagementsystems des landwirtschaftlichen Traktors mitgeteilt werden, wie es das ITEC-System des Herstellers John Deere darstellt. Die Ausführung des Reinigungsvorgangs kann hierbei vorbehaltlich einer vorherigen bedienerseitigen Freigabe bzw. Bestätigung über das Bedienterminal erfolgen.

Zusätzlich lassen sich Angaben hinsichtlich der Bodeneigenschaften bzw. Bodenverhältnisse, wie zum Beispiel Art und Feuchtigkeit des bearbeiteten Ackerbodens, einbeziehen. Die betreffenden Angaben können entweder manuell über das Bedienterminal oder aber durch Empfang entsprechender Wetter- und Bodeninformationen über eine mit der Kontrolleinheit verbundene Kommunikationsschnittstelle, die über ein drahtloses Netzwerk auf einen externen Server zugreift, mitgeteilt werden.

Optional kann die Ausführung des Reinigungsvorgangs für den Fall erweitert werden, dass der Dreipunkt-Kraftheber einen an der traktorseitigen Tragestruktur schwenkbeweglich angelenkten zentralen Oberlenker aufweist, der an seinem freien Ende ein weiteres Kupplungselement trägt und mittels einer Stellanordnung in Bezug auf seine Ausfahrlänge veränderbar ist, wobei die Stellanordnung im Reinigungsmodus auf Veranlassung der Kontrolleinheit derart angesteuert wird, dass im Bereich des weiteren Kupplungselements eine Rüttel- oder Vibrationsbewegung erzeugt wird. Letztere zeichnet sich durch dicht bzw. unmittelbar aufeinanderfolgende kurzhubige Auslenkungen in der Größenordnung einiger Millimeter bis hin zu etwa einem Zentimeter aus.

Um übermäßige Bewegungen im Bereich des Anbaugeräts auszuschließen, kann vorgesehen sein, dass die Rüttel- oder Vibrationsbewegung von der Kontrolleinheit derart koordiniert wird, dass diese ausschließlich bei stillstehenden Unterlenkern, insbesondere in deren angehobener Transportstellung, ausgeführt wird. Auch ist es abhängig vom Verschmutzungsgrad des Anbaugeräts denkbar, den Reinigungsvorgang gänzlich auf die Ausführung der Rüttel- oder Vibrationsbewegung am Oberlenker zu beschränken. Die entsprechende Auswahl kann über das Bedienterminal getroffen werden.

Die einzige **Figur** zeigt ein schematisch dargestelltes Blockdiagramm eines Ausführungsbeispiels des erfindungsgemäßen Verfahrens zur Steuerung eines Dreipunkt-Krafthebers.

Zunächst soll auf die zur Durchführung des erfindungsgemäßen Verfahrens verwendeten Komponenten näher eingegangen werden. Diese sind Bestandteil eines landwirtschaftlichen Traktors 10 mit einem in dessen Heckbereich 12 angeordneten Dreipunkt-Kraftheber 14, der der Anbringung unter anderem getragener Anbaugeräte zur Bodenbearbeitung, wie beispielsweise eines Pflugs, einer Egge, eines Grubbers oder dergleichen, dient.

Der Dreipunkt-Kraftheber 14 ist von konventioneller Bauart und umfasst linke und rechte Unterlenker 16a, 16b, die jeweils in einem ersten Endbereich 18a, 18b schwenkbeweglich an einer traktorseitigen Tragestruktur 20 angelenkt sind. Genauer gesagt sind hierfür in einem unteren Bereich 22 der traktorseitigen Tragestruktur 20 linke und rechte Anlenkstellen 24a, 24b vorgesehen, an denen ein jeweiliger der beiden Unterlenker 16a, 16b in seinem ersten Endbereich 18a, 18b mittels eines Kugelgelenks 26a, 26b befestigt ist. Bei der traktorseitigen Tragestruktur 20 handelt es sich vorliegend um ein Differentialgehäuse 28.

Ein zentraler Oberlenker 30, der an einer weiteren Anlenkstelle 32 in einem oberen Bereich 34 der traktorseitigen Tragestruktur 20 bzw. dem Differentialgehäuse 28 schwenkbeweglich angeordnet ist, dient der oberen Abstützung bzw. Führung eines an dem Dreipunkt-Kraftheber 14 angebrachten Anbaugeräts 36 (in der Figur strichliniert angedeutet). Die Unterlenker 16a, 16b weisen an ihren freien Enden 38a, 38b in einem dem ersten Endbereich 18a, 18b gegenüberliegenden zweiten Endbereich 40a, 40b jeweilige Kupplungselemente 42a, 42b auf. Auch der Oberlenker 30 trägt an seinem freien Ende 44 ein entsprechendes weiteres Kupplungselement 46. Die Kupplungselemente 42a, 42b, 46 weisen die Gestalt selbstverriegelnder Fanghaken auf, in die das Anbaugerät 36 mittels komplementär ausgebildeter Kupplungskugeln (in der Figur nicht wiedergegeben) angebracht bzw. eingehängt ist.

Zum Heben und Senken des Anbaugeräts 36 ist ein hydraulisch steuerbares Hubwerk 48 vorgesehen, das linke und rechte Hubarme 50a, 50b aufweist, die sich mittels zugehöriger Hydraulikzylinder 52a, 52b um eine gemeinsame Welle 54 verschwenken lassen, wobei die Schwenkbewegung über damit verbundene Hubstreben 56a, 56b auf die Unterlenker 16a, 16b übertragen wird. Auf diese Weise lassen sich die an den Unterlenkern 16a, 16b vorgesehenen Kupplungselemente 42a, 42b mitsamt des daran eingehängten Anbaugeräts 36 gezielt gegenüber dem Erdboden 58 anheben und absenken.

Beispielsgemäß sind die Hydraulikzylinder 52a, 52b einfachwirkend ausgebildet. Zu deren Ansteuerung dient ein mit einer lastgesteuerten Hydraulikpumpe 60 sowie einem Hydraulikreservoir 62 kommunizierendes Kraftheberventil 64, das ein Senkventil 66 sowie ein Hubventil 68 aufweist, wobei sich die beiden Ventile 66, 68 mittels eines elektrischen Aktuators 70 (beispielsweise eines Schrittmotors) über einen Exzenterantrieb wechselseitig öffnen und schließen lassen. Abweichend davon können die von dem Kraftheberventil 64 umfassten Ventile 66, 68 auch jeweils als elektrisch steuerbares Proportionalventil ausgebildet sein. Die über eine Lastmeldeleitung 72 bezüglich ihres Verdrängungsvolumens einstellbare Hydraulikpumpe 60 ist hierbei ebenso wie das Hydraulikreservoir 62 Bestandteil eines übergeordneten Hydrauliksystems des landwirtschaftlichen Traktors 10, das dem Betrieb einer Vielzahl weiterer hydraulischer Funktionen dient.

Wie in der Figur ebenfalls zu erkennen ist, lassen sich zum Anheben der Unterlenker 16a, 16b als Kolbenkammern 74a, 74b ausgebildete Arbeitskammern der Hydraulikzylinder 52a, 52b durch Öffnen des Hubventils 68 über ein Rückschlagventil 76 mit unter Druck stehender Hydraulikflüssigkeit beaufschlagen, die über eine mit der Hydraulikpumpe 60 in Verbindung stehende Versorgungsleitung 78 zugeführt wird. Das Absenken erfolgt hingegen passiv unter der Wirkung der auf die Unterlenker 16a, 16b bzw. das Anbaugerät 36 angreifenden Schwerkraft, wozu die Kolbenkammern 74a, 74b durch Öffnen des Senkventils 66 dahingehend druckentlastet werden, dass die Hydraulikflüssigkeit unter dem Einfluss der auf die Unterlenker 16a, 16b bzw. das Anbaugerät 36 wirkenden Schwerkraft über eine Rücklaufleitung 80 in Richtung des Hydraulikreservoirs 62 abfließen kann.

Zur Vermeidung transportbedingt auftretender Druckspitzen in den Kolbenkammern 74a, 74b der Hydraulikzylinder 52a, 52b ist weiterhin ein Druckbegrenzungsventil 82 vorhanden, das eine Druckentlastungsverbindung in Richtung des Hydraulikreservoirs 62 für den Fall herstellt, dass ein maximal zulässiger Arbeitsdruck im Bereich von 250 bis 270 bar überschritten ist.

Finden hingegen doppeltwirkende Hydraulikzylinder 52a, 52b Verwendung, so weisen diese als Ringkammern 84a, 84b ausgebildete weitere Arbeitskammern auf, wobei das Kraftheberventil 64 dergestalt angepasst wird, dass die Unterlenker 16a, 16b durch Druckbeaufschlagung der Ringkammern 84a, 84b bei gleichzeitiger Druckentlastung der Kolbenkammern 74a, 74b aktiv abgesenkt werden (in der Figur strichliniert dargestellt).

Der Vollständigkeit sei angemerkt, dass die Darstellung eines Dreipunkt-Krafthebers 14 im Heckbereich 12 des landwirtschaftlichen Traktors 10 lediglich beispielhaften Charakter hat. Zusätzlich oder alternativ kann ein entsprechender Dreipunkt-Kraftheber auch im Frontbereich vorhanden sein.

Zur Durchführung des erfindungsgemäßen Verfahrens dient eine Kontrolleinheit 86, die neben dem elektrischen Aktuator 70 zur Hubwerkssteuerung ferner mit einem in einer Fahrerkabine 88 des landwirtschaftlichen Traktors 10 angeordneten Bedienterminal 90, einem GPS-Navigationssystem 92 zur Ermittlung der aktuellen Position des landwirtschaftlichen Traktors 10, einem Winkelsensor 94 zur Erfassung der aktuellen Hubstellung der Unterlenker 16a, 16b, sowie einer Kommunikationsschnittstelle 96 zum Empfang unter anderem von Wetter- und Bodeninformationen in Verbindung steht

### Reinigungsmodus

In einem durch das erfindungsgemäße Verfahren verwirklichten Reinigungsmodus wird das Hubwerk 48 auf Veranlassung der Kontrolleinheit 86 über das Kraftheberventil 64 derart angesteuert, dass im Bereich der an den Unterlenkern 16a, 16b vorgesehenen Kupplungselemente 42a, 42b mitsamt des daran eingehängten Anbaugeräts 36 ein zum Erdboden 58 gerichteter Beschleunigungsimpuls aₚᵤₗₛₑ erzeugt wird. Dies erfolgt durch Unterbrechung einer an den Unterlenkern 16a, 16b durch Öffnen des Senkventils 66 hervorgerufenen kurzhubigen Absenkbewegung in der Größenordnung einiger weniger Winkelgrade.

Der aufgrund der Unterbrechung und damit plötzlichen Abbremsung der Absenkbewegung erzeugte Beschleunigungsimpuls aₚᵤₗₛₑ führt zu einem gezielten und effektiven Herabschleudern von Erdrückständen, die nach dem Ausheben des Anbaugeräts 36 aus dem Ackerboden an dessen bodeneingreifenden Bearbeitungswerkzeugen anhaften. Naturgemäß ist der erzielbare Reinigungseffekt umso besser, je größer der Betrag des Beschleunigungsimpulses aₚᵤₗₛₑ und/oder die Masse der anhaftenden Erdrückstände ist.

Ungeachtet der jeweiligen Zylinderausführungen als einfachwirkender oder doppeltwirkender Hydraulikzylinder 52a, 52b erfolgt die Unterbrechung und damit Blockierung der Absenkbewegung der Unterlenker 16a, 16b, indem das Senkventil 66 mittels des elektrischen Aktuators 70 mit möglichst geringer Steuerverzögerung geschlossen wird. Dies führt zur Erzeugung eines dementsprechend steilflankigen Beschleunigungsimpulses aₚᵤₗₛₑ.

Um eine zu möglichen Beschädigungen führende Kollision des Anbaugeräts 36 mit dem Erdboden 58 auszuschließen, wird die Absenkbewegung ausschließlich ausgehend von einer angehobenen Transportstellung der Unterlenker 16a, 16b ausgeführt. Die Erkennung der angehobenen Transportstellung erfolgt hierbei seitens der Kontrolleinheit 86, wozu diese die Sensordaten des der Erfassung der aktuellen Hubstellung der Unterlenker 16a, 16b dienenden Winkelsensors 94 auswertet.

Im Hinblick auf eine weitere Verbesserung des Reinigungseffekts durch Hervorrufen einer Rüttelbewegung ist optional vorgesehen, dass die Absenkbewegung der Unterlenker 16a, 16b nach vorheriger Rückkehr in die angehobene Transportstellung wiederholt ausgeführt wird. Die Anzahl der Wiederholungen wird vom Fahrer über das mit der Kontrolleinheit 86 in Verbindung stehende Bedienterminal 90 abhängig vom Anbaugerätetyp sowie den jeweiligen Bodenverhältnissen angepasst.

Dies erfolgt am Bedienterminal 90 entweder durch unmittelbare Vorgabe der gewünschten Anzahl der Wiederholungen über ein Eingabeelement 90a oder aber solange, wie der Bediener ein zugehöriges Bedienelement 90b betätigt (gedrückt) hält. So dürfte in aller Regel bei einem in schwerem Ackerboden eingesetzten Pflug ein erhöhter Reinigungsbedarf gegenüber einem lediglich oberflächlich eingreifenden Grubber bei trockenen Bodenbedingungen bestehen.

Der Reinigungsmodus wird entweder manuell über das Bedienterminal 90 oder aber selbsttätig aktiviert. In letzterem Fall werden von der Kontrolleinheit 86 kartografische Angaben von an die zu bearbeitende Ackerfläche angrenzenden Feld- oder Wirtschaftswegen durch Abgleich der mittels des GPS-Navigationssystems 92 ermittelten aktuellen Position der landwirtschaftlichen Traktors 10 insofern berücksichtigt, als diese bei der Durchführung eines Wendevorgangs zwischen zwei benachbarten Feldreihen oder beim Verlassen der Ackerfläche nach Abschluss des Bodenbearbeitungsvorgangs voraussichtlich befahren werden, mithin die Ausführung eines Reinigungsvorgangs ratsam ist. Die Durchführung eines Wendevorgangs wird der Kontrolleinheit 86 unter anderem seitens eines (in der Figur nicht wiedergegebenen) Vorgewendemanagementsystems des landwirtschaftlichen Traktors 10 mitgeteilt, wie es das ITEC-System des Herstellers John Deere darstellt. Die Ausführung des Reinigungsvorgangs erfolgt hierbei vorbehaltlich einer vorherigen bedienerseitigen Freigabe bzw. Bestätigung über das Bedienterminal 90, beispielsweise durch Betätigung des Bedienelements 90b.

Zusätzlich werden Angaben hinsichtlich der Bodeneigenschaften bzw. Bodenverhältnisse, wie zum Beispiel Art und Feuchtigkeit des bearbeiteten Ackerbodens, einbezogen. Die betreffenden Angaben werden entweder manuell über das Bedienterminal 90 oder aber durch Empfang entsprechender Wetter- und Bodeninformationen über die mit der Kontrolleinheit 86 verbundene Kommunikationsschnittstelle 96, die zu diesem Zweck über ein drahtloses Netzwerk 98 auf einen externen Server 100 zugreift, mitgeteilt.

Optional ist der von dem Dreipunkt-Kraftheber 14 umfasste Oberlenker 30 mittels einer als Hydraulikzylinder ausgebildeten Stellanordnung 102 in Bezug auf seine Ausfahrlänge veränderbar, wobei die Stellanordnung 102 im Reinigungsmodus auf Veranlassung der Kontrolleinheit 86 derart angesteuert wird, dass im Bereich des weiteren Kupplungselements 46 eine Rüttel- oder Vibrationsbewegung erzeugt wird. Letztere zeichnet sich durch dicht bzw. unmittelbar aufeinanderfolgende kurzhubige Auslenkungen in der Größenordnung einiger Millimeter bis hin zu etwa einem Zentimeter aus.

Dabei ist vorgesehen, dass die Rüttel- oder Vibrationsbewegung von der Kontrolleinheit 86 derart koordiniert wird, dass diese ausschließlich bei stillstehenden Unterlenkern 16a, 16b (also unbetätigtem Hubwerk 48), insbesondere in deren angehobener Transportstellung, ausgeführt wird. Wahlweise (abhängig vom Verschmutzungsgrad des Anbaugeräts 36) wird der Reinigungsvorgang gänzlich auf die Ausführung der Rüttel- oder Vibrationsbewegung am Oberlenker beschränkt. Die entsprechende Auswahl wird über das Bedienterminal 90 getroffen.

## Patentansprüche

1. Verfahren zur Steuerung eines Dreipunkt-Krafthebers, umfassend linke und rechte Unterlenker (16a, 16b), die jeweils in einem ersten Endbereich (18a, 18b) schwenkbeweglich an einer traktorseitigen Tragestruktur (20) angelenkt sind und in einem zweiten Endbereich (40a, 40b) ein Kupplungselement (42a, 42b) zur Anbringung eines Anbaugeräts (36) aufweisen, wobei sich die Kupplungselemente (42a, 42b) durch Verschwenken der Unterlenker (16a, 16b) mittels eines Hubwerks (48) gegenüber dem Erdboden (58) anheben und absenken lassen, **dadurch gekennzeichnet, dass** das Hubwerk (48) in einem Reinigungsmodus auf Veranlassung einer Kontrolleinheit (86) derart angesteuert wird, dass im Bereich der Kupplungselemente (42a, 42b) ein zum Erdboden (58) gerichteter Beschleunigungsimpuls (aₚᵤₗₛₑ) durch Unterbrechung einer an den Unterlenkern (16a, 16b) hervorgerufenen kurzhubigen Absenkbewegung erzeugt wird.

2. Verfahren nach Anspruch 1, **dadurch gekennzeichnet, dass** die Absenkbewegung ausschließlich ausgehend von einer angehobenen Transportstellung der Unterlenker (16a, 16b) ausgeführt wird.

3. Verfahren nach Anspruch 2, **dadurch gekennzeichnet, dass** die Absenkbewegung insbesondere nach vorheriger Rückkehr in die angehobene Transportstellung wiederholt ausgeführt wird.

4. Verfahren nach Anspruch 3, **dadurch gekennzeichnet, dass** der Reinigungsmodus manuell über das mit der Kontrolleinheit (86) in Verbindung stehende Bedienterminal (90) oder selbsttätig aktiviert wird.

5. Verfahren nach wenigstens einem der vorhergehenden Ansprüche, **dadurch gekennzeichnet, dass** der Dreipunkt-Kraftheber (14) einen an der traktorseitigen Tragestruktur (20) schwenkbeweglich angelenkten zentralen Oberlenker (30) aufweist, der an seinem freien Ende (44) ein weiteres Kupplungselement (46) trägt und mittels einer Stellanordnung (102) in Bezug auf seine Ausfahrlänge veränderbar ist, wobei die Stellanordnung (102) im Reinigungsmodus auf Veranlassung der Kontrolleinheit (86) derart angesteuert wird, dass im Bereich des weiteren Kupplungselements (46) eine Rüttel- oder Vibrationsbewegung erzeugt wird.

6. Verfahren nach Anspruch 5, **dadurch gekennzeichnet, dass** die Rüttel- oder Vibrationsbewegung von der Kontrolleinheit (86) derart koordiniert wird, dass diese ausschließlich bei stillstehenden Unterlenkern (16a, 16b), insbesondere in deren angehobener Transportstellung, ausgeführt wird.
